# EUROPÄISCHE PATENTSCHRIFT

(11) **EP 0 697 567 B1**
(45) Veröffentlichungstag und Bekanntmachung des Hinweises auf die Patenterteilung: **14.11.2001**
(21) Anmeldenummer: 95106029.2
(22) Anmeldetag: 21.04.1995
(51) Int. Cl.: F24C 11/00

(54) **Kombinationseinrichtung zum Zubereiten warmer Speisen**
Combined cooking units for preparing hot meals
Unités de cuisson combinées pour préparer des denrées chaudes

(30) Priorität: 21.04.1994 DE 9406680 U
(43) Veröffentlichungstag der Anmeldung: 21.02.1996
(73) Patentinhaber: ELECTROLUX PROFESSIONAL S.P.A., 31015 Conegliano (IT)
(72) Erfinder: Baumann, Udo, D-22459 Hamburg (DE)
(74) Vertreter: Höchtl, Walter, Dipl.-Ing.

(56) Entgegenhaltungen:
- EP-A- 0 344 562
- AU-B- 746 042
- BE-A- 459 183
- CH-A- 199 397
- DE-A- 4 133 635
- FR-A- 2 033 672
- FR-A- 2 550 432
- GB-A- 665 220
- GB-A- 1 258 383
- US-A- 2 036 523

## Beschreibung

Die Erfindung betrifft eine Kombinationseinrichtung zum Zubereiten warmer Speisen, mit mehreren neben- und/oder übereinander angeordneten, unterschiedlich beheizbaren Einzelgeräten.

Bei Kochherden für Privathaushalte und für Großküchen ist es bekannt, mehrere Einzelgeräte für unterschiedliche Zubereitungsarten in einer Einrichtung miteinander zu kombinieren. Eine allgemein übliche Kombination ist die von mehreren Kochplatten mit einem Backofen, der seinerseits wiederum mit einem Mikrowellenherd kombiniert sein kann. Ein Kochherd kann weiterhin auch eine integrierte Fritteuse und/oder eine Brat- und Griddleplatte aufweisen.

Aus der EP-A-0344562 ist eine Arbeitsstation für gastronomische Zubereitungen bekannt, die aus einer festen Grundanordnung besteht und modular aufgebaut sein kann. Modular aufgebaut im Sinne der EP-A-0344562 bedeutet, dass vom Hersteller oder Lieferanten einer solchen Arbeitsstation die Module entsprechend den Anforderungen und Bedürfnissen des Benutzers einmal zusammengestellt werden und dann unverändert in dieser Zusammenstellung bleiben. Damit mögen diese "Module" oder Kochmulden zwar auch zwecks Reparatur austauschbar sein, jedoch kann dies nicht vom jeweiligen Benutzer, also beispielsweise vom Koch selbst vorgenommen werden sondern es muß dazu der Kundendienst in Anspruch genommen werden. Außerdem wird ein Auswechseln der Einzelgeräte nur dann erfolgen, wenn ein Störfall, z. B. eine Reparatur, vorliegt. Dann wird aber das erneut eingesetzte Gerät wieder dasselbe sein und auch wieder für die weitere Betriebsdauer fest und für den Benutzer nicht auswechselbar mit der Arbeitsstation verbunden sein.

In Gaststätten wird es zunehmend üblich, die Küche so zu gestalten und räumlich anzuordnen, dass sie von den Gästen eingesehen werden kann. Bestimmte Gericht werden auch auf fahrbaren Herden am Tisch des Gastes zubereitet. Eine weitere Möglichkeit besteht darin, einen Herd im Gastraum aufzustellen, um dort Einzelgerichte zuzubereiten. Diese Art der Speisenzubereitung eignet sich auch gut für Veranstaltungen in Festzelten oder im Freien.

Die erfindungsgemäße Kombinationseinrichtung ist insbesondere für die letztgenannten Anwendungsmöglichkeiten geeignet, kann jedoch auch in vielfältiger anderer Weise genutzt werden. Eine für solche Zwecke verwendbare Kombinationseinrichtung muß für unterschiedliche Zubereitungsarten geeignet sein, die z.B. von Feinschmeckergerichten bis zu rustikalen Speisen reichen. Würde man alle hierfür erforderlichen Geräte in der Kombinationseinrichtung zusammenfassen, so würde dies zu groß und für viele Anwender zu teuer. Es besteht war die Möglichkeit, je nach Bedarf und Kundenwunsch bestimmte Einzelgeräte miteinander zu kombinieren, jedoch liegt damit die einmal gewählte Kombination fest und eine spätere Änderung oder Ergänzung ist nicht mehr möglich.

Der Erfindung liegt die Aufgabe zugrunde, eine Kombinationseinrichtung der eingangs genannten Art so auszubilden, dass sie bedienerseitig an unterschiedliche Einsatzzwecke angepasst und ggf. nachträglich ergänzt werden kann.

Diese Aufgabe wird durch die Merkmale des Anspruchs 1 gelöst.

Auf diese Weise können als Grundanordnung diejenigen Kochgeräte vorgesehen werden, die auf jeden Fall benötigt werden, z.B. mehrere Kochplatten und eine Fritteuse. Als auswechselbare Einzelgeräte können dann weitere Kochgeräte zur Verfügung stehen, die je nach Bedarf mit der Grundanordnung verbunden und an diese angeschlossen werden. Dabei steht es dem Benutzer frei, wie viele und welche Einzelgeräte er bereithalten will.

Eine zweckmäßige und optisch ansprechende Anordnung besteht darin, daß in der Grundanordnung zwei Einzelgeräte mit Abstand nebeneinander angeordnet sind und zwischen sich eine Nische bilden, in der mehrere davon untergebracht werden kann.

Voteilhafte Ausgestaltungen der erfindungsgemäßen Kombinationseinrichtung sind in den Ansprüchen 2 bis 21 gekennzeichnet.

Die Erfindung wird nachfolgend anhand der Zeichnung beispielsweise beschrieben. Es zeigt:
Fig. 1 die Vorderansicht einer erfindungsgemäßen Kombinationseinrichtung,
Fig. 2 einen Schnitt in der Linie II-II von Fig. 3,
Fig. 3 eine erfindungsgemäße Kombinationseinrichtung in Aufsicht.

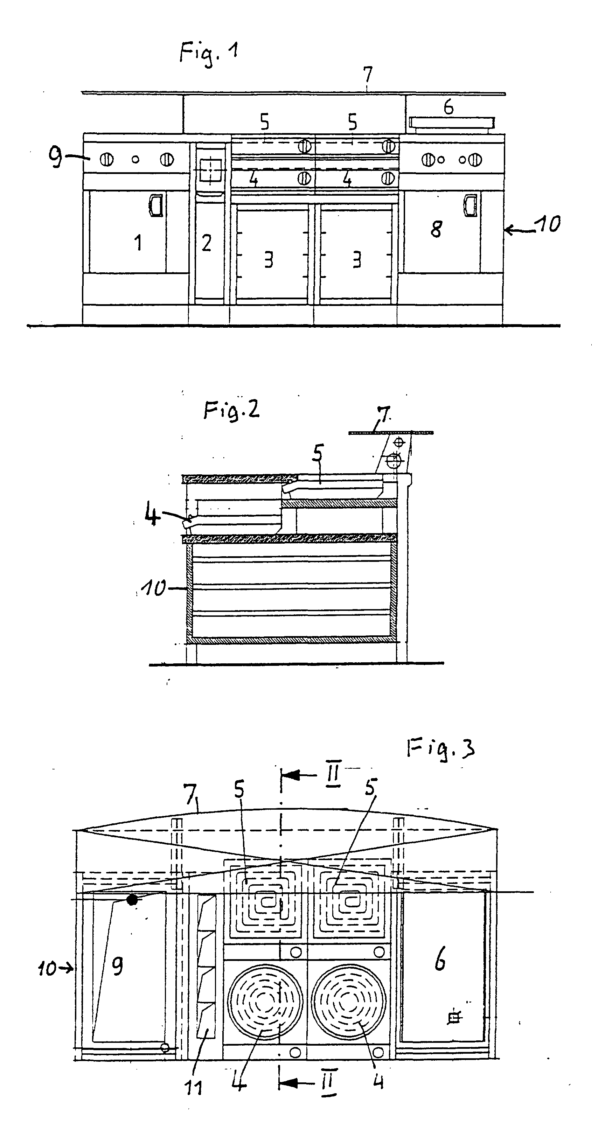

Die in den Fig. 1 bis 3 gezeigte Kombinationseinrichtung wird von einer Grundanordnung 10 in Form eines Sockels gebildet, in dessen Unterteil mehrere Vorratsräume ausgebildet sind. In dem dargestellten Beispiel bezeichnet die Ziffer 1 einen Vorratsschrank mit Tür, 2 ist ein Flaschenauszug für Gewürze, Spirituosen u.dgl., und bei 3 ist Raum für Einschübe mit Nahrungsmittelvorräten. In dem verschließbaren Raum 8 sind die Anschlüsse für Strom bzw. Gas und Wasser untergebracht.

Zu der Grundanordnung 10 gehören ferner zwei fest installierte Einzelgeräte, die auf der Oberseite des Sockels an beiden Seiten angeordnet sind. Dabei handelt es sich um eine Griddle-Platte 6 und um einen Pasta-Cooker 9. Neben dem Pasta-Cooker 9 ist noch eine Gewürzstation 11 vorgesehen, die ebenfalls fest mit der Grundanordnung verbunden ist und in der die wichtigsten Gewürze griffbereit zur Verfügung stehen.

Wie insbesondere Fig. 1 erkennen läßt, bilden die beiden festen Einzelgeräte zwischen sich eine Nische, in der weitere Einzelgeräte auswechselbar angebracht und durch geeignete Anschlüsse mit der Grundanordnung verbunden werden können. So sind bei 4 zwei Heizaggregate für Woks dargestellt, während die Bezugsziffern 5 Koch- und Warmhalteplatten für Töpfe bezeichnen. Die Geräte 4 und 5 können mit einer elektrischen Widerstandsbeheizung, einem Infrarotstrahler oder einer Induktionsbeheizung ausgestattet sein. Zur besseren Zugänglichkeit sind die bei 5 vorgesehenen Geräte höher angeordnet als die davor befindlichen Geräte 4.

An der der Benutzerseite gegenüberliegenden Längsseite der Grundanordnung ist eine Anrichtplatte 7 angebracht, die mit Abstand über den festen und den auswechselbaren Einzelgeräten liegt. Letztere bleiben dadurch zugänglich, während die Anrichtplatte noch im Bereich der Wärmestrahlung dieser Geräte liegt, so daß die bereitgehaltenen fertigen Gerichte in gewissem Umfang noch warmgehalten werden.

In die zwischen den festen Einzelgeräten befindliche Nische können je nach Bedarf verschiedene auswechselbare Einzelgeräte oder wahlweise auf einem fahrbaren Gestell eingefahren werden und dort angeschlossen werden.

Während die in Fig. 3 vorgesehene Kombination mit den Woks 4 insbesondere für asiatische bzw. euroasiatische Gerichte geeignet ist, dient der in der Nische angeordnete Pizzaofen 12 zum Bereiten italienischer Gerichte. Zur Anrichtseite hin ist dabei eine beheizbare Ausgabeplatte vorgesehen.

Es kann auch in die Nische eine Waffelstation 14 mit einem Doppel-Waffeleisen eingesetzt werden. Diese Variante ist für französiche Küche besonders geeignet.

Es kann auch einen Bratrost 15 zum Bereiten von Grillwürsten o.dgl., wie es z.B. für bayrisch-rustikale Anwendungen in Frage kommen.

## Patentansprüche

1. Kombinationseinrichtung zum Zubereiten warmer Speisen, mit mehreren neben- und/oder übereinander angeordneten, unterschiedlich beheizbaren Einzelgeräten, **dadurch gekennzeichnet, daß** mindestens zwei Einzelgeräte in einer unveränderlichen Grundanordnung (10) fest miteinander verbunden sind und daß mehrere weitere an die Grundanordnung angepaßte Einzelgeräte vorgesehen sind, die bedienerseitig auswechselbar mit der Grundanordnung (10) zu verbinden sind.

2. Kombinationseinrichtung nach Anspruch 1, **dadurch gekennzeichnet, daß** zwei der die Grundanordnung (10) bildenden Einzelgeräte (6, 9) mit Abstand voneinander nebeneinander angeordnet sind und der zwischen ihnen befindliche Zwischenraum zum Anbringen wenigstens zwei auswechselbaren Einzelgeräte (4, 5, 12, 14, 15) ausgebildet ist.

3. Kombinationseinrichtung nach Anspruch 2, **dadurch gekennzeichnet, daß** der Zwischenraum zwischen den beiden die Grundanordnung (10) bildenden Einzelgeräten in Form einer Nische vertieft ausgebildet ist.

4. Kombinationseinrichtung nach einem der Ansprüche 1 bis 3, **dadurch gekennzeichnet, daß** die Grundanordnung (10) in Form eines Sockels ausgebildet ist, auf dessen Oberseite die festen und die auswechselbaren Einzelgeräte angeordnet sind.

5. Kombinationseinrichtung nach Anspruch 4, **dadurch gekennzeichnet, daß** in dem Sockel Vorratsräume und/oder - schränke (1, 2, 3) ausgebildet sind.

6. Kombinationseinrichtung nach Anspruch 4 oder 5, **dadurch gekennzeichnet, daß** in dem Sockel ein Backofen angeordnet ist.

7. Kombinationseinrichtung nach Anspruch 4, 5 oder 6, **dadurch gekennzeichnet, daß** in dem Sockel ein Mikrowellenofen angeordnet ist.

8. Kombinationseinrichtung nach einem der Ansprüche 4 bis 7, **dadurch gekennzeichnet, daß** an der Oberseite des Sockels eine Gewürzstation (11) angeordnet ist.

9. Kombinationseinrichtung nach einem der Ansprüche 1 bis 8, **dadurch gekennzeichnet, daß** eines der festen Einzelgeräte als Pasta-Cooker (9) ausgebildet ist.

10. Kombinationseinrichtung nach einem der Ansprüche 1 bis 9, **dadurch gekennzeichnet, daß** eines der festen Einzelgeräte als Griddle-Platte (6) ausgebildet ist.

11. Kombinationseinrichtung nach einem der Ansprüche 1 bis 10, **dadurch gekennzeichnet, daß** mindestens eines der auswechselbaren Einzelgeräte als Wok (4) ausgebildet ist.

12. Kombinationseinrichtung nach einem der Ansprüche 1 bis 10, **dadurch gekennzeichnet, daß** mindestens eines der auswechselbaren Einzelgeräte als Koch- und Warmhalteplatte (5) ausgebildet ist.

13. Kombinationseinrichtung nach Anspruch 11 oder 12, **dadurch gekennzeichnet, daß** mindestens eines der auswechselbaren Einzelgeräte induktionsbeheizt ist.

14. Kombinationseinrichtung nach einem der Ansprüche 1 bis 13, **dadurch gekennzeichnet, daß** eines der auswechselbaren Einzelgeräte als Pizza-Ofen (12) ausgebildet ist.

15. Kombinationseinrichtung nach Anspruch 14, **dadurch gekennzeichnet, daß** der Pizza-Ofen (12) eine beheizbare Ausgabefläche (13) aufweist.

16. Kombinationseinrichtung nach einem der Ansprüche 1 bis 15, **dadurch gekennzeichnet, daß** eines der auswechselbaren Einzelgeräte als Infrarot-Bratrost (15) für Grillgerichte ausgebildet ist.

17. Kombinationseinrichtung nach einem der Ansprüche 1 bis 16, **dadurch gekennzeichnet, daß** eines der auswechselbaren Einzelgeräte als Waffelstation (14) ausgebildet ist.

18. Kombinationseinrichtung nach Anspruch 17, **dadurch gekennzeichnet, daß** die Waffelstation (14) mit einem Doppel-Waffeleisen ausgestattet ist.

19. Kombinationseinrichtung nach einem der Ansprüche 1 bis 18, **dadurch gekennzeichnet, daß** an der Grundanordnung (10) eine Anrichtfläche (7) angebracht ist.

20. Kombinationseinrichtung nach Anspruch 19, **dadurch gekennzeichnet, daß** die Anrichtfläche (7) sich im wesentlichen über eine Längsseite der Grundanordnung (10) erstreckt.

21. Kombinationseinrichtung nach Anspruch 18 oder 19, **dadurch gekennzeichnet, daß** die Anrichtfläche (7) mit Abstand oberhalb eines Teils der beheizbaren Einzelgeräte angeordnet ist.

## Claims

1. Combination appliance for preparing hot foods, having a plurality of individual devices heatable in different ways and disposed next to and/or above one another, **characterised in that** at least two individual devices are permanently joined together in an invariable basic arrangement (10), and **in that** a plurality of further individual devices fitting the basic arrangement are provided, which are intended to be connected to the basic arrangement in an exchangeable manner by the operator.

2. Combination appliance according to claim 1, **characterised in that** two of the individual devices (6, 9) forming the basic arrangement (10) are disposed adjacent to one another, spaced apart, and the space between them is formed to accommodate at least two exchangeable individual devices (4, 5, 12, 14, 15).

3. Combination appliance according to claim 2, **characterised in that** the space between the two individual devices forming the basic arrangement (10) is formed as a recessed niche.

4. Combination appliance according to one of claims 1 to 3, **characterised in that** the basic arrangement (10) takes the form of a base on whose upper face the fixed and exchangeable individual devices are disposed.

5. Combination appliance according to claim 4, **characterised in that** supply chambers and/or cupboards (1, 2, 3) are formed in the base.

6. Combination appliance according to claim 4 or 5, **characterised in that** a baking oven is disposed in the base.

7. Combination appliance according to claim 4, 5 or 6, **characterised in that** a microwave oven is disposed in the base.

8. Combination appliance according to one of claims 4 to 7, **characterised in that** a seasoning station (11) is disposed on the upper face of the base.

9. Combination appliance according to one of claims 1 to 8, **characterised in that** one of the fixed individual devices takes the form of a pasta cooker (9).

10. Combination appliance according to one of claims 1 to 9, **characterised in that** one of the fixed individual devices takes the form of a griddle (6).

11. Combination appliance according to one of claims 1 to 10, **characterised in that** at least one of the exchangeable individual devices takes the form of a wok (4).

12. Combination appliance according to one of claims 1 to 10, **characterised in that** at least one of the exchangeable individual devices takes the form of a plate for boiling and keeping hot.

13. Combination appliance according to claim 11 or 12, **characterised in that** at least one of the exchangeable individual devices is induction-heated.

14. Combination appliance according to one of claims 1 to 13, **characterised in that** one of the exchangeable individual devices takes the form of a pizza oven (12).

15. Combination appliance according to claim 14, **characterised in that** the pizza oven (12) has a heatable output face (13).

16. Combination appliance according to one of claims 1 to 15, **characterised in that** one of the exchangeable individual devices takes the form of an infrared roasting grid (15) for grilled dishes.

17. Combination appliance according to one of claims 1 to 16, **characterised in that** one of the exchangeable individual devices is formed as a waffle station (14).

18. Combination appliance according to claim 17, **characterised in that** the waffle station (14) is equipped with a double waffle-iron.

19. Combination appliance according to one of claims 1 to 18, **characterised in that** a preparation/arrangement surface (7) is housed on the basic arrangement (10).

20. Combination appliance according to claim 19, **characterised in that** the preparation/arrangement surface (7) extends substantially over one longitudinal side of the basic arrangement (10).

21. Combination appliance according to claim 18 or 19, **characterised in that** the preparation/arrangement surface (7) is disposed with clearance above some of the heatable individual devices.

## Revendications

1. Installation combinée pour la préparation de mets chauds, avec plusieurs appareils individuels disposés les uns à côté des autres et/ou les uns au-dessus des autres, pouvant être chauffés différemment, **caractérisée en ce qu'**au moins deux appareils individuels sont reliés solidement selon un agencement de base non modifiable (10) et **en ce que** plusieurs autres appareils individuels adaptés à l'agencement de base sont prévus qui, côté opérateur, peuvent être reliés d'une manière échangeable à l'agencement de base (10).

2. Installation combinée selon la revendication 1, **caractérisée en ce que** deux des appareils individuels (6, 9) formant l'agencement de base (10) sont disposés à un écart l'un à côté de l'autre et **en ce que** l'espace intermédiaire se trouvant entre eux est réalisé pour installer au moins deux appareils individuels échangeable (4, 5, 12, 14, 15).

3. Installation combinée selon la revendication 2, **caractérisée en ce que** l'espace intermédiaire entre les deux appareils individuels formant l'agencement de base (10) est réalisé en creux sous la forme d'une niche.

4. Installation combinée selon l'une des revendication 1 à 3, **caractérisée en ce que** l'agencement de base (10) est réalisé sous la forme d'un socle, sur le côté supérieur duquel sont disposés les appareils individuels fixes et échangeables.

5. Installation combinée selon la revendication 4, **caractérisée en ce que** des enceintes et/ou armoires de stockage (1, 2, 3) sont réalisées dans le socle.

6. Installation combinée selon la revendication 4 ou 5, **caractérisée en ce qu'**un four est disposé dans le socle.

7. Installation combinée selon la revendication 4, 5 ou 6, **caractérisée en ce qu'**un four micro-ondes est disposé dans le socle.

8. Installation combinée selon l'une des revendications 4 à 7, **caractérisée en ce qu'**un poste de condiments ou d'épices (11) est disposé au côté supérieur du socle.

9. Installation combinée selon l'une des revendications 1 à 8, **caractérisée en ce que** l'un des appareils individuels fixes est réalisé comme appareil de cuisson de pâtes (9).

10. Installation combinée selon l'une des revendications 1 à 9, **caractérisée en ce que** l'un des appareils individuels fixes est réalisé comme plaque à griller (6).

11. Installation combinée selon l'une des revendications 1 à 10, **caractérisée en ce qu'**au moins l'un des appareils individuels échangeables est réalisé comme wok (4).

12. Installation combinée selon l'une des revendications 1 à 10, **caractérisée en ce qu'**au moins l'un des appareils individuels échangeables est réalisé comme plaque de cuisson et de maintien au chaud (5).

13. Installation combinée selon la revendication 11 ou 12, **caractérisée en ce qu'**au moins l'un des appareils individuels échangeables est chauffé à induction.

14. Installation combinée selon l'une des revendications 1 à 13, **caractérisée en ce que** l'un des appareils individuels échangeables est réalisé comme four à pizza (12).

15. Installation combinée selon la revendication 14, **caractérisée en ce que** le four à pizza (12) présente une face de distribution (13) pouvant être chauffée.

16. Installation combinée selon l'une des revendications 1 à 15, **caractérisée en ce que** l'un des appareils individuels échangeables est réalisé comme gril infrarouge (15) pour des mets à griller.

17. Installation combinée selon l'une des revendication 1 à 16, **caractérisée en ce que** l'un des appareils individuels échangeable est réalisé comme poste à gaufres (14).

18. Installation combinée selon la revendication 17, **caractérisée en ce que** le poste à gaufres (14) est équipé d'un appareil à gaufres double.

19. Installation combinée selon l'une des revendications 1 à 18, **caractérisée en ce qu'**il est disposé à l'agencement de base (10) une surface formant dressoir (7).

20. Installation combinée selon la revendication 19, **caractérisée en ce que** la surface formant dressoir (7) s'étend sensiblement sur un côté longitudinal de l'agencement de base (10).

21. Installation combinée selon la revendication 18 ou 19, **caractérisée en ce que** la surface formant dressoir (7) est disposée à une distance au-dessus d'une partie des appareils individuels aptes à être chauffés.
